# FASCICULE DE BREVET EUROPEEN

(11) **EP 2 330 275 B1**
(45) Date de publication et mention de la délivrance du brevet: **15.02.2017**
(21) Numéro de dépôt: 10193803.3
(22) Date de dépôt: 06.12.2010
(51) Int. Cl.: F01D 21/14, F02C 9/28, F02C 9/46

(54) **Procédé de détection d'une fuite de combustible liquide dans une turbine à gaz**
Verfahren zur Feststellung einer Brennstoffleckage in einer Gasturbine
Process to detect liquid fuel leakages in a gas turbine

(30) Priorité: 07.12.2009 FR 0958715
(43) Date de publication de la demande: 08.06.2011
(73) Titulaire: GE Energy Products France SNC, 90000 Belfort (FR)
(72) Inventeur: Martin, Denis, 25600 Vieux Charmont (FR)
(74) Mandataire: Delprat, Olivier

(56) Documents cités:
- US-A- 5 307 620
- US-A1- 2006 195 248
- US-A1- 2008 125 930

## Description

L'invention concerne le domaine général des machines de production d'énergie électrique comprenant des systèmes à combustion interne, et notamment les turbines à gaz.

Classiquement, une turbine à gaz comporte un conduit d'admission d'air, un compresseur à un ou plusieurs étages de compression avec un dispositif de régulation de débit d'air, un système de combustion interne, une turbine de détente reliée mécaniquement au compresseur, et un conduit pour le rejet des gaz d'échappement. Pour la mise en route de la turbine à gaz, on utilise un moteur de lancement qui assure le rôle de démarreur.

Les différents fluides, nécessaires au fonctionnement de la turbine, arrivent par des circuits indépendants. On distingue le circuit d'admission de l'air ambiant apte à être comprimé dans le compresseur et un conduit d'air d'atomisation d'un combustible liquide après son entrée dans la chambre de combustion, le combustible provenant d'un conduit d'alimentation en combustible liquide.

Plus précisément, l'air d'atomisation provient d'une extraction d'air aux derniers étages du compresseur. Il permet de atomiser le combustible liquide tel que le fioul en un brouillard de fines gouttelettes, facilitant ainsi sa combustion et son efficacité, tout en évitant la formation de fumée et les émissions de monoxyde de carbone, conséquences d'une combustion incomplète ou de la présence des imbrulés.

Cependant, lors d'une phase de démarrage, c'est-à-dire après le découplage du rotor du moteur de lancement et avant le couplage de l'alternateur, avant que la vitesse nominale ait été atteinte, il y a une ouverture importante d'aubes qui régulent le débit d'air du compresseur de la turbine à gaz. Il peut se produire une augmentation soudaine du débit de fioul jusqu'à sa valeur maximale autorisée, qui n'est toutefois pas le débit maximal possible de la pompe à fioul. Ce dysfonctionnement n'est, cependant, pas toujours accompagné d'une accélération du rotor de la turbine ni d'une augmentation de la température des gaz d'échappement.

Dans ces conditions, il est probable qu'une partie du fioul provenant du conduit d'alimentation du combustible liquide soit envoyée ailleurs que dans la chambre de combustion et notamment dans le conduit d'air d'atomisation de ce combustible. Les fuites peuvent être causées, notamment, par une la différence de pression entre la chambre à combustion et le circuit d'air d'atomisation ou par un défaut des injecteurs à passage concentriques.

Cette anomalie provoque ainsi un fonctionnement dégradé engendré par un déficit de débit dans la chambre, sans toutefois provoquer l'arrêt de la machine.

Cependant vers la fin de la phase de démarrage, les aubes de régulation d'entrée d'air du compresseur s'ouvrent à leur valeur maximale, passant en environ 5 secondes d'un angle de 35° à 54°, par rapport au plan vertical. Cette ouverture peut, en fonction de la température ambiante, démarrer entre 75 et 85% de la vitesse nominale. La pression du circuit d'air d'atomisation peut alors augmenter et le fioul accumulé dans ce circuit être envoyé soudainement vers le système de combustion. Le dispositif de contrôle déclenche alors l'arrêt de la turbine, par une détection de survitesse du rotor et une surtempérature des gaz d'échappement, c'est-à-dire une augmentation rédhibitoire de la température des gaz d'échappement.

L'endommagement de la turbine est donc inévitable car son arrêt intervient après une importante introduction de combustible non contrôlée, ce qui implique des coûts de maintenance accrus dus à la surtempérature et à la survitesse.

Il est actuellement possible de réaliser la détection des conséquences d'une fuite de fioul dans une turbine telles qu'un débit de fioul anormal, une diminution de l'accélération du rotor de la turbine, une baisse de la température à l'échappement, et l'ouverture d'aubes de régulation d'admission d'air en entrée du compresseur. On utilise à cet effet un dispositif de contrôle des paramètres de fonctionnement de la turbine à gaz, tel que celui développé par General Electric et dont le nom commercial est SPEEDTRONIC™.

Bien que ce dispositif soit efficace pour arrêter la turbine en cas de survitesse ou de surtempérature, il existe toujours des risques d'endommagement de la turbine.

En outre, le document US 5 307 620 concerne la mise en oeuvre d'une opération de détection d'une fuite de pression dans une ligne d'alimentation de combustible.

Le but de l'invention est donc de pallier les inconvénients précités en proposant un procédé d'identification rapide et fiable d'une fuite de fioul vers un autre circuit de la turbine, en particulier, vers le circuit d'air d'atomisation, qui soit capable d'assurer le démarrage optimal de la turbine et la protéger d'éventuelles détériorations dans le temps.

L'invention a donc pour objet un procédé de détection de la présence d'une fuite de combustible liquide dans une turbine à gaz selon la revendication 1.

On peut en outre procéder à une troisième mesure d'un paramètre de fonctionnement, comparer la valeur mesurée et une valeur maximale de référence correspondante et, sur une période donnée, identifier si une troisième anomalie est présente, et déclencher l'arrêt de la turbine si une troisième anomalie est détectée.

On peut vérifier que la vitesse de rotation est inférieure à 90% de la vitesse nominale de la turbine.

La méthode peut ainsi comporter au mois trois détections parallèles dont l'une peut déclencher une alarme et les autres l'arrêt de la machine.

Avantageusement, les paramètres de fonctionnement peuvent comprendre le débit de combustible liquide et/ou l'accélération de la vitesse de rotation de la turbine et/ou l'ouverture des aubes d'admission d'air à l'entrée du compresseur et la vitesse de rotation de la turbine.

Des tests et des constatations ont montré qu'une fuite d'une durée d'environ 90 secondes équivaut à envoyer quelques 80 litres de fioul vers le circuit d'air d'atomisation. En revanche, une diminution du volume de fuite d'un quart élimine le risque de survitesse lors de l'ouverture de vannes en fin de la phase de démarrage. La période maximale de constation d'une fuite peut ainsi être de l'ordre de 15 secondes. Le dispositif de contrôle agit toutefois immédiatement lorsqu'il détecte une fuite de fioul pendant une durée maximale de 15 secondes.

En revanche, la diminution de l'accélération est mesurée dans des périodes plus courtes en raison de l'inertie de rotation de la turbine, laquelle continue d'accélérer après une diminution du débit de fioul. C'est pourquoi le calcul de la pente d'accélération s'effectue ici pendant une durée de 5 secondes.

Par ailleurs, il est important de détecter un débit de fioul anormalement élevé ou maximal lors de la phase de démarrage et avant l'ouverture complète des aubes d'admission d'air du compresseur, car à cet instant, la pression sur le circuit d'air atomisation augmente, et le fioul présent dans le circuit peut soudainement être envoyé vers la chambre de combustion, provoquant la survitesse et la dégradation de la machine.

Préalablement à la mesure de la valeur pour ledit paramètre et à la comparaison dudit paramètre avec la valeur de référence, on vérifie que la vitesse de rotation de la turbine est inférieure à un pourcentage prédéterminé de la vitesse maximale de la turbine, et que les aubes sont en cours d'ouverture.

Si la condition portant sur la vitesse de rotation de la turbine, par exemple inférieure à 90% de la vitesse nominale, et si la condition portant sur le début d'ouverture des aubes sont satisfaites, on mesure le débit de fioul pendant une durée prédéterminée, par exemple de 5 secondes et l'on détermine une valeur de référence correspondante.

Si la valeur mesurée est égale à la valeur de référence pendant la durée prédéterminée une anomalie est détectée et la turbine arrêtée.

Si les conditions portant sur la vitesse de la turbine et l'ouverture des aubes ne sont pas satisfaites, si le paramètre de fonctionnement est le débit de combustible liquide, on détermine sa valeur de référence, on mesure sa valeur pendant la phase de démarrage de la turbine et, si la valeur mesurée est supérieure à la valeur de référence pendant une durée prédéterminée, par exemple d'au moins 15 secondes, une anomalie est détectée et la turbine arrêtée.

On notera que la valeur de référence du débit fioul est la valeur maximale du débit de combustible, calculée en fonction du type de fioul et du débit nécessaire pour atteindre la vitesse de couplage de la turbine à l'alternateur (« *Full speed no load »*).

Par ailleurs, si le paramètre de fonctionnement est l'accélération de la turbine, on détermine sa valeur de référence, on mesure sa valeur à chaque intervalle de 5 secondes pendant la phase de démarrage, on compare la valeur de référence et la valeur mesurée et, si l'accélération mesurée est inférieure à un pourcentage prédéterminé de l'accélération de référence, traduisant par exemple que l'augmentation de la première anomalie peut être détectée, une notification d'alerte est générée.

Selon un autre exemple de mise en oeuvre du procédé, si le paramètre de fonctionnement comprend la vitesse du rotor ou le débit fioul, on détermine sa valeur de référence, on mesure sa valeur, par exemple à partir de 90% de la vitesse nominale de la turbine lors du démarrage. Si la valeur mesurée est supérieure à la valeur de référence pendant au moins 5 secondes, une anomalie est identifiée et la turbine arrêtée.

Avantageusement, après le déclenchement de l'arrêt de la turbine, une étape de purge du conduit d'éjection du combustible liquide peut être opérée pendant au moins 5 minutes. On peut alors démarrer la turbine 5 secondes après son arrêt, c'est-à-dire après la perte de flamme.

L'invention concerne également un dispositif de détection d'une fuite de combustible liquide dans une turbine à gaz mettant en oeuvre un procédé tel que défini ci-dessus.

La présente invention sera mieux comprise à la lecture de la description de quelques modes de réalisation, donnés à titre d'exemples nullement limitatifs et illustrés sur les dessins annexés :
- la figure 1 est un schéma d'une turbine à gaz munie d'un injecteur et de circuits d'acheminement de fioul et d'air d'atomisation susceptible de subir des fuites ;
- la figure 2 est un graphe représentant l'évolution des différents paramètres de fonctionnement de la turbine lors d'une fuite de fioul ;
- la figure 3 est un organigramme illustrant le fonctionnement du procédé de détection de fuite selon l'invention.

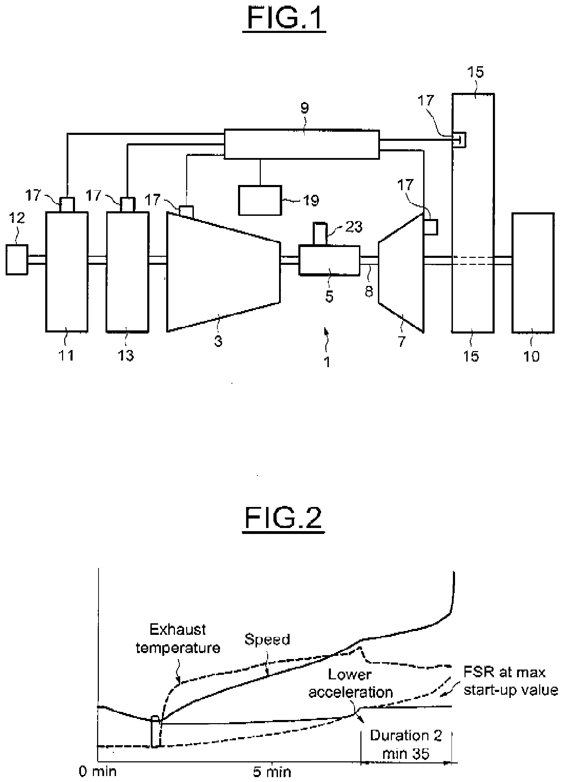

On va tout d'abord décrire, en référence à la figure 1, une turbine à gaz 1.

Comme on le voit, une turbine à gaz 1 comprend un compresseur 3, une chambre de combustion 5 et une turbine 7 couplée au compresseur 3.

En fonctionnement, de l'air entre par un conduit 11 à travers les aubes d'admission d'air 13 du compresseur 3. Les gaz chauds se détendent en traversant la turbine 7, où l'énergie thermique des gaz chauds est transformée en énergie mécanique. Un conduit d'éjection 15 de ces gaz issus de la chambre de combustion est prévu sur la turbine 7.

Le mouvement de rotation de la turbine 7 est communiqué à un arbre 8 qui actionne d'une part le compresseur 3 et d'autre part une charge qui n'est autre qu'un appareil 10 récepteur tel qu'une pompe, un alternateur, etc., accouplé à son extrémité droite.

Pour la mise en route de la turbine à gaz, on utilise un moteur de lancement 12 qui assure la fonction de démarreur. Le réglage de la puissance et de la vitesse de rotation est possible en agissant sur le débit de l'air en entrée du compresseur et sur l'injection du carburant.

Le compresseur 3 comporte une ou plusieurs couronnes successives d'aubes fixes (non représentées) agencées pour redresser le flux de gaz. Entre ces couronnes sont destinées à s'étendre des roues d'aubes mobiles, non représentées. Chaque paire de roue d'aubes mobiles et de couronne d'aubes fixes forme un étage du compresseur. Les roues d'aubes mobiles compriment le gaz par activation des aubes d'admission d'air et chaque couronne d'aubes fixes redresse le flux de gaz issu de la roue le précédant.

Du gaz, ou un combustible liquide atomisé selon le mode de fonctionnement envisagé ici, est injecté dans la chambre de combustion 5 par l'intermédiaire d'un injecteur 23 et s'enflamme dans la chambre 5 en se mélangeant avec l'air comprimé par le compresseur 3.

Pour atomiser le combustible liquide, ici du fioul, un gaz d'atomisation tel que de l'air est injecté de manière à déstabiliser le flux de combustible et former un spray de combustible présentant une surface de contact accrue avec le comburant en vue de favoriser la combustion. Pour cela, l'injecteur 23 comprend un conduit d'éjection de fioul liquide et un conduit d'éjection d'air comprimé (non représentés), le jet de fioul s'écoulant à une vitesse relativement faible et étant déstabilisé par un écoulement à grande vitesse de l'air comprimé.

Le fonctionnement de la turbine à gaz 1 est contrôlé par divers capteurs 17 détectant ses conditions de fonctionnement. Par exemple, des capteurs de température détectent la température des gaz d'échappement à la sortie de la turbine et d'autres températures issues de la turbine. Des capteurs de pression peuvent contrôler la pression ambiante, les pressions statique et dynamique à l'entrée et à la sortie du compresseur, de même que la pression en d'autres points du flux de gaz opérant dans la turbine 1. Les capteurs 17 peuvent aussi comprendre des capteurs d'humidité, des capteurs d'écoulement du gaz, des capteurs de vitesse du rotor de la turbine, des capteurs de détection de flamme dans la chambre de combustion, des capteurs de contrôle de l'ouverture des aubes d'admission de l'air entrant dans le compresseur et bien d'autres capteurs aptes à contrôler des paramètres de fonctionnement pertinents de la turbine à gaz 1. Tel qu'employé ci-dessus, le terme « paramètre » se réfère aux grandeurs pouvant être utilisées pour définir les conditions de fonctionnement de la turbine à gaz 1 tel que la température, la pression, la vitesse, l'angle d'ouverture des aubes d'admission d'air, le débit d'écoulement du gaz à divers endroit de la turbine et qui peuvent illustrer le bon ou le mauvais état de fonctionnement de ladite turbine à gaz 1.

Les capteurs 17 sont connectés à un dispositif de contrôle 9 des paramètres de fonctionnement de la turbine à gaz 1. Il peut s'agir d'un dispositif développé par General Electric et dont le nom commercial est SPEEDTRONIC™ tel qu'un ordinateur comprenant un processeur apte à exécuter un programme de contrôle des paramètres de fonctionnement de la turbine à gaz 1 en utilisant les valeurs recueillies par les capteurs 17 et les instructions des opérateurs humains.

Un dispositif de contrôle de l'écoulement du fioul 19 régule son débit dans le conduit d'éjection jusqu'à son atomisation à l'aide du conduit d'éjection d'air comprimé. Le dispositif de contrôle du débit de fioul peut être une unité de contrôle indépendante du dispositif de contrôle 9 des paramètres de fonctionnement de la turbine à gaz ou être intégré à ce dernier.

Pour détecter une fuite de fioul vers un conduit de la turbine à gaz non approprié et notamment vers le conduit d'air d'atomisation, on surveille des paramètres caractéristiques de fonctionnement de la turbine à gaz 1 et l'on déclenche si besoin une notification d'alerte, voire un arrêt complet de la turbine 1.

Ces paramètres ont été choisis en observant les différentes conséquences d'une fuite tel qu'illustrées sur le graphe de la figure 2 :
- diminution de l'accélération de la turbine à gaz,
- augmentation du débit de fioul pour compenser la diminution de l'accélération,
- valeur maximale du débit de fioul pendant au moins 15 secondes,
- ouverture des aubes d'admission d'air à l'entrée du compresseur (non représentée sur le graphe),
- augmentation voire baisse de la température dans le conduit d'échappement des gaz chauds après passage dans la turbine, et
- survitesse de l'arbre de la turbine.

Selon ces observations, les paramètres surveillés considérés comme les plus fiables pour une détection rapide de la fuite sont : le débit de fioul, l'accélération de l'arbre de la turbine 1 et l'ouverture des aubes d'admission d'air à l'entrée du compresseur 3.

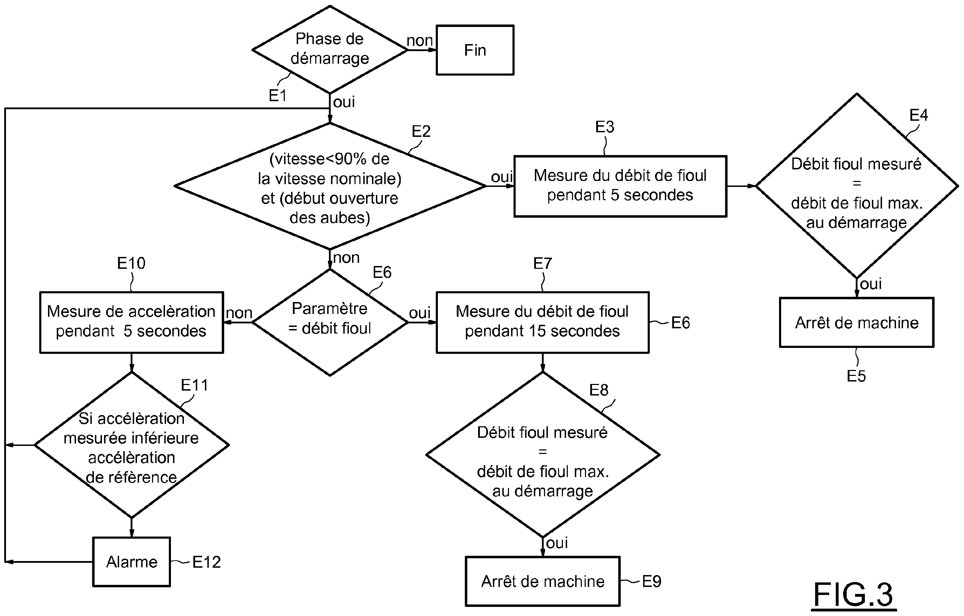

Considérant la figure 3, il y est présenté un organigramme illustrant des exemples nullement limitatifs d'opérations exécutées par le dispositif de contrôle 9 pour la détection, le signalement automatique d'une fuite de fioul dans la turbine à gaz 1 et l'arrêt de la turbine. Un aspect avantageux de l'exemple de procédé ci-après consiste en ce que le propriétaire/l'exploitant de la turbine à gaz 1 est avisé de la fuite par un signal sonore ou visuel rapidement et automatiquement après la détection de la fuite et ce de manière fiable. Le déclenchement de l'arrêt de la turbine est aussi prévu si un second paramètre de fonctionnement s'avère anormal.

Ainsi, si seule une première anomalie de l'accélération est identifiée, le dispositif 9 génère uniquement une notification d'alerte. Si la première anomalie de l'accélération et la seconde anomalie du débit de fioul sont identifiées, le dispositif de contrôle 9 génère une notification d'alerte et l'arrêt de la turbine lors de l'étape.

Si l'arrêt de la turbine à gaz est déclenché, une purge du circuit de fioul est opérée pendant au moins 5 min, au plus 5 secondes après la perte de la flamme dans la chambre de combustion 5. Cette purge a pour but de permettre d'évacuer le fioul pour éviter la cokéfaction du fioul et aussi pour refroidir les injecteurs proches de la chambre à combustion. Il convient de préciser que les mesures des paramètres sont effectuées seulement si la vitesse permet une rotation autonome de la turbine, et si au moins une flamme de combustion est détectée dans la chambre de combustion 5.

Ainsi, selon l'invention, il est procédé à un contrôle en parallèle de divers paramètres de fonctionnement de la turbine.

Si une première anomalie est présente en ce qui concerne un premier paramètre de fonctionnement, par exemple l'accélération, une notification d'alerte est générée.

Par contre, si une anomalie est détectée en ce qui concerne au moins un deuxième paramètre de fonctionnement, la turbine est arrêtée.

Par exemple, dans divers modes de mise en oeuvre, on peut générer une notification d'alerte si le contrôle de l'accélération de la turbine révèle une anomalie et l'on arrête la turbine si le contrôle de l'ouverture des vannes d'admission du compresseur ou du débit de fuel révèle une anomalie.

Comme le montre la figure 3, il est ainsi procédé, lors d'une première étape E1, à la détection d'une phase de démarrage, c'est-à-dire entre le découplage du système de lancement et la fin de la phase de démarrage, c'est-à-dire lorsqu'une flamme de combustion est détectée. Si tel est le cas, lors de l'étape E2 suivante, on détecte si la vitesse de rotation des turbines est inférieure à 90% de la vitesse nominale des turbines, et si l'ouverture des aubes d'admission d'air a débuté, c'est-à-dire si l'angle de l'ouverture des aubes a atteint 35°.

Si tel est le cas, si ces deux conditions sont satisfaites, par exemple, lors de l'étape E3 suivante, on procède à la mesure du débit de fioul pendant une durée prédéterminée, ici cinq secondes.

Le dispositif 9 détermine également la valeur de référence pour le débit de fioul. Cette valeur est déterminée en admettant qu'il s'agit de la valeur maximale du débit de fioul permissible pour le fonctionnement de la turbine.

Si le débit de fioul mesuré est supérieur ou égal au débit de fioul maximal au démarrage pendant cette durée de cinq secondes (étape E4), on arrête la machine (étape E5).

Si l'une des deux conditions vérifiées lors de l'étape E2 précédente n'est pas satisfaite, lors de l'étape E6 suivante, on contrôle le paramètre en cours de vérification. En particulier, on détecte si le paramètre contrôlé est le débit du fioul.

Si tel est le cas, on procède à la mesure du débit de fuel (étape E7) pendant une durée prédéterminée, ici de quinze secondes, puis l'on vérifie si le débit de fuel mesuré est supérieur ou égal au débit de fuel maximal au démarrage pendant cette durée de 15 secondes (étape E8). On procède alors, si tel est le cas, à l'arrêt de la machine (étape E9).

Parallèlement, si lors de l'étape E6 précédente, il a été déterminé que le paramètre contrôlé n'est pas le débit de fioul, lors de l'étape E10 suivante, on procède à la mesure de l'accélération du rotor de la turbine et ce, pendant cinq secondes (étape E10). Par ailleurs, le dispositif détermine la valeur de référence pour l'accélération du rotor de la turbine. Cette valeur est déterminée en calculant la vitesse du rotor à l'arrêt puis 5 secondes après son lancement, la différence entre les deux valeurs de vitesses étant prise comme référence pour l'accélération.

Si, lors de l'étape E11 suivante, on détecte que l'accélération mesurée est inférieure à l'accélération de référence, on génère une alarme (étape E12).

Par exemple, on compare la valeur de référence et la valeur mesurée et si l'accélération mesurée est inférieure ou égale à 0,08% de l'accélération de référence, ou, en d'autres termes, si l'accroissement de la vitesse est inférieure à l'accroissement de vitesse de référence 0,08%, une alarme est générée, car l'accélération est lente. Si aucune anomalie n'est détectée, le procédé retourne à l'étape E2 précédente.

Selon l'invention, le dispositif de contrôle 9 exécutera le procédé de détection de fuite tel que décrit ci-dessus. Il peut alors se trouver sous la forme :
- d'un code de programme informatique contenant des instructions exécutés sur des supports physiques tels que des disquettes, des CD-ROM, des disques durs ou tout autre support de stockage lisible par le dispositif 9, auquel cas, lorsque le code de programme informatique est chargé dans ou exécuté par le dispositif de contrôle 9, il devient apte à appliquer le procédé de détection selon l'invention,
- d'un code de programme informatique, que celui-ci soit stocké dans un support de stockage, chargé et/ou exécuté par un ordinateur ou transmis par l'intermédiaire d'un moyen de transmission, notamment par des fils ou des câbles électriques via des fibres optiques ou par rayonnement électromagnétique, auquel cas, lorsque le code de programme informatique est chargé dans et/ou exécuté par le dispositif de contrôle 9, il devient apte à appliquer le procédé de détection selon l'invention,
- d'un code de programme informatique configurant un microprocesseur universel pour créer des circuits logiques spécifiques (c'est-à-dire un ensemble de circuits logiques programmés), auquel cas, lorsque le code de programme informatique est chargé dans et/ou exécuté par le dispositif de contrôle 9, il devient apte à appliquer le procédé de détection selon l'invention.

Le programme exécuté par le dispositif de contrôle 9 peut aussi comprendre des algorithmes paramétrés dans le temps pour réguler l'écoulement du fioul dans la chambre de combustion 5.

Grâce à l'invention, on bénéficie d'un dispositif automatique, simple et fiable pour contrôler les paramètres de fonctionnement et signaler des anomalies présentes dans la turbine à gaz. Le dispositif indique la présence d'une fuite de fioul vers un conduit inapproprié de la turbine, par exemple vers le conduit d'air d'atomisation de l'injecteur et fournit une notification d'alerte de la fuite, le plus précocement possible, à un propriétaire ou exploitant de turbine à gaz de façon à faciliter la planification et l'exécution d'interventions d'entretien le plus en amont possible. Il peut également, selon les cas, déclencher l'arrêt de la turbine et sa purge automatique pour protéger ladite turbine de toute dégradation que la fuite pourrait provoquer. Selon l'invention, l'ordre de détection des anomalies est aléatoire et on pourrait décrire bien d'autres exemples de réalisation du procédé sans sortir du cadre de l'invention.

## Revendications

1. Procédé de détection de la présence d'une fuite de combustible liquide dans une turbine à gaz (1), dans lequel:
- on détermine une valeur de référence pour au moins un premier paramètre de fonctionnement de la turbine,
- on mesure une valeur pour ledit paramètre de fonctionnement pendant une phase de démarrage de la turbine,
- on compare la valeur mesurée et la valeur de référence,
- on identifie si une première anomalie est présente,
- on génère une notification d'alerte si une première anomalie est détectée pour le premier paramètre, et
- on déclenche l'arrêt de la turbine si une seconde anomalie est détectée pour un second paramètre de fonctionnement, l'étape de mesure pour lesdits paramètres de fonctionnement étant effectuée lors de la phase de démarrage entre l'arrêt du système de lancement de la turbine et la détection d'au moins une flamme de combustion.

2. Procédé la revendication 1, **caractérisé en ce que** l'on mesure une valeur d'un deuxième paramètre de fonctionnement pendant la phase de démarrage, on compare la valeur mesurée et une valeur de référence, on identifie si une anomalie est présente et l'on déclenche l'arrêt de la turbine si une seconde anomalie est détectée, on mesure une valeur pour un troisième paramètre de fonctionnement pendant la phase de démarrage, on compare la valeur mesurée du troisième paramètre de fonctionnement avec une valeur de référence, on identifie si une anomalie est présente et l'on déclenche l'arrêt de la turbine si une troisième anomalie est détectée.

3. Procédé selon l'une des revendications 1 et 2, **caractérisé en ce que** les paramètres de fonctionnement comprennent le débit de combustible liquide et/ou l'accélération de la vitesse de rotation de la turbine et/ou l'ouverture de vannes d'air d'admission du compresseur et la vitesse de rotation de la turbine.

4. Procédé selon l'une quelconque des revendications 1 à 3, **caractérisé en ce que** préalablement à la mesure de la valeur pour ledit paramètre et à la comparaison dudit paramètre avec la valeur de référence, on vérifie que la vitesse de rotation de la turbine est inférieure à un pourcentage prédéterminé de la vitesse nominale de la turbine et que les aubes sont en cours d'ouverture.

5. Procédé selon la revendication 4, **caractérisé en ce que** l'on vérifie que la vitesse de rotation de la turbine est inférieure à 90% de la vitesse nominale de la turbine.

6. Procédé selon l'une des revendications 4 et 5 dans lequel, si la condition portant sur la vitesse de rotation de la turbine, inférieure à un pourcentage prédéterminée de la vitesse nominale de la turbine, et si la condition portant sur le débit d'ouverture des aubes sont satisfaites, on mesure le débit de fioul pendant une durée prédéterminée, par exemple de 5 secondes, et l'on détermine une valeur de référence correspondante pour le débit de fioul et, si la valeur mesurée est égale à la valeur de référence pendant ladite durée déterminée, une anomalie est détectée et la turbine arrêtée.

7. Procédé selon l'une quelconque des revendications 1 à 6, **caractérisé en ce que** si le paramètre de fonctionnement étant le débit de combustible liquide, on détermine sa valeur de référence (37), on mesure (39) sa valeur pendant la phase de démarrage de la turbine, on compare la valeur de référence et la valeur mesurée, et si la valeur mesurée est supérieure à la valeur de référence pendant une durée prédéterminée, par exemple d'au moins 15 secondes, on détecte une anomalie et l'on arrête la turbine.

8. Procédé selon la revendication 7, **caractérisé en ce que** la valeur de référence (27) est la valeur maximale du débit de combustible liquide permissible lors du démarrage de la turbine.

9. Procédé selon l'une quelconque des revendications précédentes, **caractérisé en ce que** le première paramètre de fonctionnement étant l'accélération de la turbine, on détermine sa valeur de référence (27), on mesure (29) sa valeur pendant le démarrage de la turbine et si la valeur mesurée est inférieure à un pourcentage prédéterminé de la valeur de référence, une première anomalie (31) est identifiée et on génère une notification d'alerte (33).

10. Procédé selon l'une quelconque des revendications 3 à 9, **caractérisé en ce que** si, simultanément à une première anomalie d'accélération, la valeur mesurée (39) du débit de combustible liquide est supérieure à sa valeur de référence (37) pendant au moins 15 secondes, une seconde anomalie (44) est identifiée et l'on déclenche l'arrêt de la turbine (45).

11. Procédé selon l'une quelconque des revendications précédentes, **caractérisé en ce qu'**après le déclenchement de l'arrêt de la turbine, une étape de purge du conduit d'éjection du combustible liquide est opéré pendant au moins 5 minutes, au plus 5 secondes après la perte de flamme.

12. Dispositif de détection d'une fuite de combustible liquide dans une turbine à gaz (1) comprenant:
un dispositif de contrôle (9) des paramètres de fonctionnement de la turbine et un support de stockage lisible par un ordinateur dans lequel sont stockées des instructions d'un programme informatique exécutables par ledit dispositif (9), les instructions du programme informatique amenant le dispositif de contrôle des paramètres à:
- déterminer une valeur de référence pour un premier paramètre de fonctionnement de la turbine,
- mesurer une valeur pour le même paramètre de fonctionnement après le démarrage de la turbine,
- comparer les valeurs de référence et mesurées,
- identifier si une première anomalie est présente selon des caractéristiques prédéterminées,
- générer une notification d'alerte si une première anomalie est détectée pour un premier paramètre, et en parallèle
- déclencher l'arrêt de la turbine si une seconde anomalie est détectée pour un second paramètre, l'étape de mesure pour lesdits paramètres de fonctionnement étant effectuée lors de la phase de démarrage entre l'arrêt du système de lancement de la turbine et la détection d'au moins une flamme de combustion.

## Patentansprüche

1. Verfahren zur Feststellung des Vorliegens einer Flüssigbrennstoffleckage in einer Gasturbine (1), wobei:
- ein Referenzwert für wenigstens einen ersten Betriebsparameter der Turbine bestimmt wird,
- ein Wert für diesen Betriebsparameter während einer Anlaufphase der Turbine gemessen wird,
- der Messwert und der Referenzwert verglichen werden,
- bestimmt wird, ob eine erste Anomalie vorliegt,
- eine Warnmeldung erzeugt wird, falls eine erste Anomalie für den ersten Parameter erkannt wird, und
- das Abstellen der Turbine ausgelöst wird, falls eine zweite Anomalie für einen zweiten Betriebsparameter erkannt wird, wobei der Schritt der Messung für die Betriebsparameter während der Anlaufphase zwischen dem Abstellen des Startsystems der Turbine und der Erkennung wenigstens einer Verbrennungsflamme durchgeführt wird.

2. Verfahren Anspruch 1, **dadurch gekennzeichnet, dass** ein Wert eines zweiten Betriebsparameters während der Anlaufphase gemessen wird, der Messwert und ein Referenzwert verglichen werden, bestimmt wird, ob eine Anomalie vorliegt, und das Abstellen der Turbine ausgelöst wird, falls eine zweite Anomalie erkannt wird, ein Wert für einen dritten Betriebsparameter während der Anlaufphase gemessen wird, der Messwert des dritten Betriebsparameters mit einem Referenzwert verglichen wird, bestimmt wird, ob eine Anomalie vorliegt, und das Abstellen der Turbine ausgelöst wird, falls eine dritte Anomalie erkannt wird.

3. Verfahren nach einem der Ansprüche 1 und 2, **dadurch gekennzeichnet, dass** die Betriebsparameter den Durchfluss von Flüssigbrennstoff und/oder die Beschleunigung der Drehzahl der Turbine und/oder das Öffnen der Lufteinlassventile des Verdichters und die Drehzahl der Turbine umfassen.

4. Verfahren nach einem der Ansprüche 1 bis 3, **dadurch gekennzeichnet, dass** vor der Messung des Wertes für den Parameter und dem Vergleich des Parameters mit dem Referenzwert überprüft wird, ob die Drehzahl der Turbine niedriger als ein vorbestimmter Prozentsatz der Nenndrehzahl der Turbine ist und ob das Öffnen der Schaufeln im Gange ist.

5. Verfahren nach Anspruch 4, **dadurch gekennzeichnet, dass** überprüft wird, ob die Drehzahl der Turbine niedriger als 90 % der Nenndrehzahl der Turbine ist.

6. Verfahren nach einem der Ansprüche 4 und 5, wobei, falls die Bedingung bezüglich der Drehzahl der Turbine, die niedriger als ein vorbestimmter Prozentsatz der Nenndrehzahl der Turbine sein soll, und die Bedingung bezüglich des Öffnungsgrades der Schaufeln erfüllt sind, der Durchfluss von Brennöl während einer vorbestimmten Dauer, zum Beispiel von 5 Sekunden, gemessen wird und ein entsprechender Referenzwert für den Durchfluss von Brennöl bestimmt wird, und falls der Messwert während dieser bestimmten Dauer gleich dem Referenzwert ist, eine Anomalie erkannt und die Turbine abgestellt wird.

7. Verfahren nach einem der Ansprüche 1 bis 6, **dadurch gekennzeichnet, dass**, falls der Betriebsparameter der Durchfluss von Flüssigbrennstoff ist, sein Referenzwert (37) bestimmt wird, sein Wert (39) während der Anlaufphase der Turbine gemessen wird, der Referenzwert und der Messwert verglichen werden, und falls der Messwert während einer vorbestimmten Dauer, zum Beispiel von wenigstens 15 Sekunden, größer als der Referenzwert ist, eine Anomalie erkannt wird und die Turbine abgestellt wird.

8. Verfahren nach Anspruch 7, **dadurch gekennzeichnet, dass** der Referenzwert (27) der maximale zulässige Wert des Durchflusses von Flüssigbrennstoff während des Anlaufens der Turbine ist.

9. Verfahren nach einem der vorhergehenden Ansprüche, **dadurch gekennzeichnet, dass**, wenn der erste Betriebsparameter die Beschleunigung der Turbine ist, sein Referenzwert (27) bestimmt wird, sein Wert (29) während des Anlaufs der Turbine gemessen wird, und falls der Messwert kleiner als ein vorbestimmter Prozentsatz des Referenzwertes ist, eine erste Anomalie (31) bestimmt wird und eine Warnmeldung (33) erzeugt wird.

10. Verfahren nach einem der Ansprüche 3 bis 9, **dadurch gekennzeichnet, dass**, falls gleichzeitig mit einer ersten Anomalie der Beschleunigung der Messwert (39) des Durchflusses von Flüssigbrennstoff wenigstens 15 Sekunden lang größer als sein Referenzwert (37) ist, eine zweite Anomalie (44) bestimmt wird und das Abstellen der Turbine (45) ausgelöst wird.

11. Verfahren nach einem der vorhergehenden Ansprüche, **dadurch gekennzeichnet, dass** nach der Auslösung des Abstellens der Turbine spätestens 5 Sekunden nach dem Erlöschen der Flamme wenigstens 5 Minuten lang ein Schritt der Reinigung des Ausstoßkanals des Flüssigbrennstoffs durchgeführt wird.

12. Vorrichtung zur Feststellung einer Flüssigbrennstoffleckage in einer Gasturbine (1), umfassend:
eine Vorrichtung zur Steuerung (9) der Betriebsparameter der Turbine und ein computerlesbares Speichermedium, auf dem Anweisungen eines Computerprogramms gespeichert sind, die von der Vorrichtung (9) ausführbar sind,
wobei die Anweisungen des Computerprogramms bewirken, dass die Vorrichtung zur Steuerung der Parameter:
- einen Referenzwert für einen ersten Betriebsparameter der Turbine bestimmt,
- nach dem Anlaufen der Turbine einen Wert für denselben Betriebsparameter misst,
- den Referenzwert und den Messwert vergleicht,
- gemäß vorbestimmten Merkmalen bestimmt, ob eine erste Anomalie vorliegt,
- eine Warnmeldung erzeugt, falls eine erste Anomalie für einen ersten Parameter erkannt wird, und parallel dazu
- das Abstellen der Turbine auslöst, falls eine zweite Anomalie für einen zweiten Parameter erkannt wird, wobei der Schritt der Messung für die Betriebsparameter während der Anlaufphase zwischen dem Abstellen des Startsystems der Turbine und der Erkennung wenigstens einer Verbrennungsflamme durchgeführt wird.

## Claims

1. Method of detecting the presence of a liquid fuel leak in a gas turbine (1), in which:
- a reference value is determined for at least a first operating parameter of the turbine,
- a value of the said operating parameter is measured during a start-up phase of the turbine,
- the measurement value and the reference value are compared,
- whether a first anomaly is present is identified,
- an alert notification is generated if a first anomaly is detected for the first parameter, and
- shutdown of the turbine is triggered if a second anomaly is detected for a second operating parameter, the measurement step for the said operating parameters being carried out during the start-up phase between shutdown of the activating system of the turbine and detection of at least one combustion flame.

2. Method according to Claim 1, **characterized in that** a value of a second operating parameter is measured during the start-up phase, the measured value and a reference value are compared, whether an anomaly is present is identified and shutdown of the turbine is triggered if a second anomaly is detected, a value of a third operating parameter is measured during the start-up phase, the measured value of the third operating parameter is compared with a reference value, whether an anomaly is present is identified and shutdown of the turbine is triggered if a third anomaly is detected.

3. Method according to either of Claims 1 and 2, **characterized in that** the operating parameters comprise the liquid fuel flow rate and/or the acceleration of the rotation speed of the turbine and/or the opening of intake air valves of the compressor and the rotation speed of the turbine.

4. Method according to any one of Claims 1 to 3, **characterized in that** before measuring the value of the said parameter and comparing the said parameter with the reference value, a check is made that the rotation speed of the turbine is less than a predetermined percentage of the full speed of the turbine and that the blades are being opened.

5. Method according to Claim 4, **characterized in that** a check is made that the rotation speed of the turbine is less than 90% of the full speed of the turbine.

6. Method according to one of Claims 4 and 5, in which, if the condition relating to the rotation speed of the turbine being less than a predetermined percentage of the full speed of the turbine, and the condition relating to the opening rate of the blades are satisfactory, the flow rate is measured for a predetermined duration, for example 5 seconds, and a corresponding reference value is determined for the flow rate and, if the measured value is equal to the reference value for the said determined duration, an anomaly is detected and the turbine is shut down.

7. Method according to any one of Claims 1 to 6, **characterized in that**, the operating parameter being the liquid fuel flow rate, its reference value (37) is determined, its value (39) is measured during the start-up phase of the turbine, the reference value and the measured value are compared, and if the measured value is greater than the reference value for a predetermined duration, for example at least 15 seconds, an anomaly is detected and the turbine is shut down.

8. Method according to Claim 7, **characterized in that** the reference value (27) is the maximum value of the liquid fuel flow rate which is permissible during start-up of the turbine.

9. Method according to any one of the preceding claims, **characterized in that**, the first operating parameter being the acceleration of the turbine, its reference value (27) is determined, its value (29) is measured during the start-up of the turbine, the reference value and the measured value are compared, and if the measured value is less than a predetermined percentage of the reference value, a first anomaly (31) is identified and an alert notification (33) is generated.

10. Method according to any one of Claims 3 to 9, **characterized in that** if, simultaneously with a first acceleration anomaly, the measured value (39) of the liquid fuel flow rate is greater than its reference value (37) for at least 15 seconds, a second anomaly (44) is identified and shutdown of the turbine (45) is triggered.

11. Method according to any one of the preceding claims, **characterized in that** after triggering shutdown of the turbine, a step of purging the ejection duct for the liquid fuel is carried out for at least 5 minutes, at most 5 seconds after the loss of the flame.

12. Device for detecting a liquid fuel leak in a gas turbine (1), comprising: a device (9) for monitoring the operating parameters of the turbine and a storage medium readable by a computer, in which computer program instructions executable by the said device (9) are stored, the instructions of the computer program making the parameter monitoring device:
- determine a reference value for a first operating parameter of the turbine,
- measure a value for the same operating parameter after start-up of the turbine,
- compare the reference and measured values,
- identify whether a first anomaly is present according to predetermined characteristics,
- generate an alert notification if a first anomaly is detected for a first parameter, and in parallel
- trigger shutdown of the turbine if a second anomaly is detected for a second parameter, the measurement step for the said operating parameters being carried out during the start-up phase between shutting down the activating system of the turbine and detecting at least one combustion flame.
